# EUROPEAN PATENT SPECIFICATION

(11) **EP 0 974 071 B1**
(45) Date of publication and mention of the grant of the patent: **26.07.2006**
(21) Application number: 99900601.8
(22) Date of filing: 28.01.1999
(51) Int. Cl.: G02F 1/13363, G02F 1/1335, G02F 1/1337, G09F 9/35

(54) **Dual domain twisted nematic liquid crystal display device comprising a compensator with oblique indicatrix**
Anzeigevorrichtung mit verdrillt-nematischen Flüssigkristallen mit zwei Domänen, umfassend einen Kompensator mit geneigter Indikatrix
Dispositif d'affichage à cristaux liquides nématiques en hélice ayant deux domaines, comprenant un compensateur à indicatrice oblique

(30) Priority: 11.02.1998 EP 98200429
(43) Date of publication of application: 26.01.2000
(73) Proprietor: Koninklijke Philips Electronics N.V., 5621 BA Eindhoven (NL)
(72) Inventor: STALLINGA, Sjoerd, NL-5656 AA Eindhoven (NL); VAN DE WITTE, Peter, NL-5656 AA Eindhoven (NL)
(74) Representative: van der Veer, Johannis Leendert
(86) International application number: PCT/IB1999/000156
(87) International publication number: WO 1999/041636

(56) References cited:
- WO-A1-96/10771
- WO-A1-96/10774
- WO-A1-96/10775
- WO-A1-97/18495
- US-A- 5 499 126

## Description

The invention relates to a liquid crystal display device with a display cell provided with a number of pixels, comprising a layer of a nematic liquid crystal material between a first substrate provided with an orientation layer inducing an orientation direction in the molecules of the liquid crystal material and a second substrate, each of the pixels being divided in two sub-pixels of opposite twist sense.

Such display devices are generally applied in, for example, monitors, TV-applications and, for example, in display devices used in automobiles and instruments.

A display device of the type mentioned in the opening paragraph is described in WO 97/18495. In the device shown in said document, (a so-called Dual-Domain-Twisted-Nematic-LCD) pixels are divided into sub-pixels to reduce the viewing angle dependence, whereby the angle dependence is different for both sub-pixels. In the example shown in said document, this is achieved by introducing, at one surface, different directions of orientation for different parts of a pixel. In the device shown in said document, this is achieved by irradiating different parts of a poly(vinyl 4-methoxy-cinnamate) layer with UV-light linearly polarized in different directions. The other substrate is covered with an orientation layer of polyimide which is rubbed in only one direction. Other ways of obtaining a dual-domain structure use, for example, the addition of opposed chiral dopings to the liquid crystal material. In such a dual-domain structure, the grey-scale inversion is reduced considerably, however, this is achieved at the expense of the contrast of the image displayed. The preamble of claim 1 is based on said document.

It is an object of the invention to provide, inter alia, a display device of the type mentioned hereinabove, in which the contrast of the image displayed is improved over a large angular range (particularly in the horizontal direction), while grey-scale inversion occurs hardly or not at all.

To achieve this, a display device in accordance with the invention is arranged as specified in claim 1.

By a tilted optical principal axis is meant that the optical principal axis forms an angle α, where 0° < α < 90°, relative to the normal to the surface of the substrate (plane)(support).

A retardation foil is to be taken to mean a layer, whether self-supporting or not, of a birefringent material or a layer having an optically compensating or retarding effect (an optically anisotropic layer). In the case of birefringence, the refractive index varies as a function of the direction of the vector of the electric field associated with a light beam. Birefringent material has only one axis to which applies that a light beam with the vector of the electric field along said axis is refracted with an extraordinary refractive index nₑ. The relevant axis is also referred to as the optical principal axis of the material. For light beams with the vector of the electric field at right angles to this axis, the refractive index may be the same for all directions (ordinary refractive index nₒ). If the refractive index varies in the direction at right angles to this axis, the material is referred to as biaxial material. In this application, "the optical principal axis of a layer (foil)" is to be taken to mean the average optical principal axis across the thickness of the layer (the foil). Dependent upon the type of material and the structure of the layer, the optical principal axis of the material may vary, for example, only in a plane at right angles to the layer. The variation occurs, for example, in the angle of the optical principal axis relative to the plane of the layer; thereby varies the effective refractive index across the thickness of said layer. Viewed transversely to the layer, however, also the direction of the optical principal axis in the plane of the layer may vary.

The invention is based on the realization that the liquid crystal molecules in the driven state give different twists for the two sub-cells, however, for the liquid crystal layers situated near the first substrate, these twists can be considered identical. This part of the liquid crystal layer is optimally compensated by the retardation foil if this retardation foil has an indicatrix with a principal axis which includes a small angle with the axis extending transversely to the liquid crystal layer. By virtue thereof, the contrast is improved considerably while the reduction in grey-scale inversion, obtained by using the dual-domain structure, is preserved.

A first embodiment of a display device in accordance with the invention is characterized in that the retardation foil comprises a first sub-foil having an optical principal axis in a plane parallel to the first substrate plane, and a second sub-foil having an optical principal axis which is tilted relative to the normal to the first substrate plane.

As the material for these retardation foils, in principle, use can be made of all liquid crystalline materials. Preferably, however, use is made of liquid crystalline polymeric materials, which are the reaction product of monomers or a mixture of monomers comprising a reactive group. Such polymeric materials have the advantage that the orientation of liquid crystalline monomers can take place prior to the polymerization. The polymerization causes such an orientation to be fixed as it were. It is noted that such a mixture may additionally comprise, without losing its liquid crystalline character, nonreactive (liquid crystalline) materials and/or non-liquid crystalline monomers. The reactive monomers preferably include a liquid crystalline group.

For further details of such a retardation foil reference is made to WO 97/44703. The retardation foil may also comprise a material of the group formed by tantalum oxide, tungsten oxide, silicon oxide and titanium oxide, or a dichroic material.

A further embodiment of a display device in accordance with the invention is characterized in that the display cell is situated between the retardation foil and at least one further retardation foil. The condition of the two sub-cells in the energized state is not such that they can be considered identical near the second substrate. Preferably, for the further retardation foil use is made of a positively birefringent foil whose optical axis extends practically perpendicularly to the orientation directions of the liquid crystal material, or a negatively birefringent foil whose optical axis extends perpendicularly to the substrate. Also a biaxially birefringent foil can be used.

These and other aspects of the invention will be apparent from and elucidated with reference to the embodiments described hereinafter.

In the drawings:
Fig. 1 is a schematic, cross-sectional view of a part of a liquid crystal display device in accordance with the invention,
Fig. 2 shows a part of the display device shown in Fig. 1,
Fig. 3 schematically explains by means of so-called indicatrices the optical behavior of a known device which is analogous to the one shown in Fig. 2,
Fig. 4 schematically shows the differences between the display device in accordance with the invention and that shown in Fig. 3, and
Figs. 5 through 7 show iso-contrast curves for different display devices.

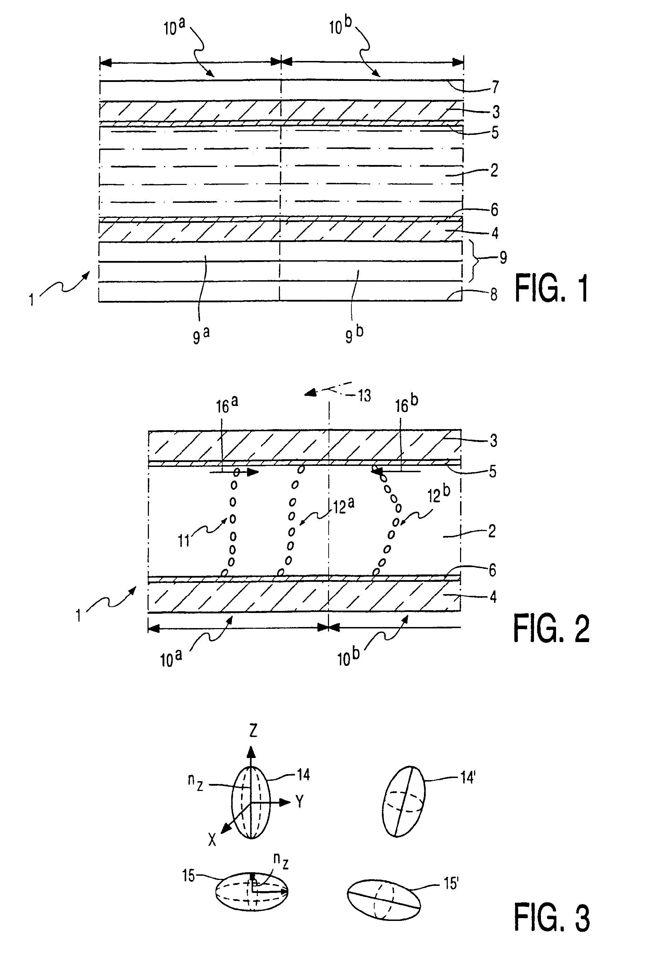

Fig. 1 is a schematic, cross-sectional view of a part of a liquid crystal display device, for example the size of a pixel, comprising a liquid crystal cell 1 with a twisted nematic liquid crystalline material 2 sandwiched between two substrates 3, 4, for example of glass, provided with electrodes 5, 6. The device further comprises two polarizers 7, 8 having mutually perpendicular directions of polarization. Each pixel is divided into sub-pixels 10^{a}, 10^{b} (dual-domain device). The cell further includes orientation layers (not shown) which orient the liquid crystalline material at the inner walls of the substrates. In this example, at the location of the substrate 3, the molecules are oriented in opposite directions 16^{a}, 16^{b}, parallel to the polarization axis of the polarizer 7 and, at the location of the substrate 4, the molecules are oriented parallel to the polarization axis of the polarizer 8, so that the sub-pixels 10^{a}, 10^{b} have a twist angle of approximately 90 degrees, yet of opposite twist sense. In this case, the liquid crystalline material has a positive optical anisotropy and a positive dielectric anisotropy. Thus, if the electrodes 5, 6 are energized with an electric voltage, the molecules and hence the directors orient themselves towards the field. Consequently, in the ideal case, all molecules extend practically perpendicularly to the two substrates (situation 11 in Fig. 2). In practice however this situation requires too high a voltage; at customary voltages, the molecules make a small angle with the normal to the substrates 3, 4, which corresponds to situation 12^{a} in Fig. 2. As a result, from the direction 13, one looks mainly in the direction of the molecules, so that, for any light still passed at this voltage, a strong and, in addition, asymmetric angle dependence occurs. This angle dependence can be explained by means of the so-called "optical indicatrix", which is a three-dimensional geometrical representation of the refractive index for each direction in which the vector of the electric field component of the light can oscillate. For optically isotropic material, this optical indicatrix is spherical, for biaxial material it is ellipsoidal, and for uniaxial material it is ellipsoidal with axial symmetry. Since, in the ideal case, the liquid crystalline layer in the driven state is uniaxial practically throughout its thickness (in almost all molecule layers, with the exception of the molecule layers near the substrates, the molecules extend at right angles to the substrates), the situation 11 of Fig. 2 can be represented by the indicatrix 14 in Fig. 3 having an ellipsoidal shape and the main axis extending transversely to the liquid crystal layer, the refractive index n_{z} at right angles to the substrates being larger than the refractive index in the planes parallel to the substrates (nₓ = n_{y}).

Birefringence occurs because the liquid is not isotropic. This birefringence can provenly be compensated for by means of an ellipsoidal indicatrix 15, in Fig. 3, with an axis transverse to the liquid crystal layer, the refractive index n_{z} at right angles to the substrates being smaller than the refractive index in the planes parallel to the substrates (nₓ = n_{y}).

At the voltages customarily used in practice, the molecules include a small angle with the normal to the substrates 3, 4, which corresponds for sub-pixel 10^{a} to situation 12^{a} shown in Fig. 2. In this more practical situation, the indicatrix 14' has a principal axis which includes a small angle with the axis which extends transversely to the liquid crystal layer; the indicatrix 14 is slightly tilted as it were relative to this axis. A proper compensation is achieved in this case by a retardation layer (compensator layer) 9 with an indicatrix 15' obtained by tilting as it were the indicatrix 15 in the same manner relative to this axis.

In a device in accordance with the invention, each pixel comprises two sub-pixels 10^{a}, 10^{b} having different orientation directions 16 at the substrate 3; at the customary voltages, the molecules again include a small angle with the normal to the substrates 3, 4, however, this angle now corresponds for sub-pixel 10^{b} to situation 12^{b} in Fig. 2. As a result, viewed from the direction 13, one does not look in the direction of the molecules. As a result, the indicatrix 15' is unsuitable for sub-pixel 12^{b}. The corresponding optical axis would have to be rotated through 90 degrees relative to the axis at right angles to the substrates, so that the optical axis of the rotated indicatrix practically compensates for the average indicatrix of sub-pixel 12^{b}.

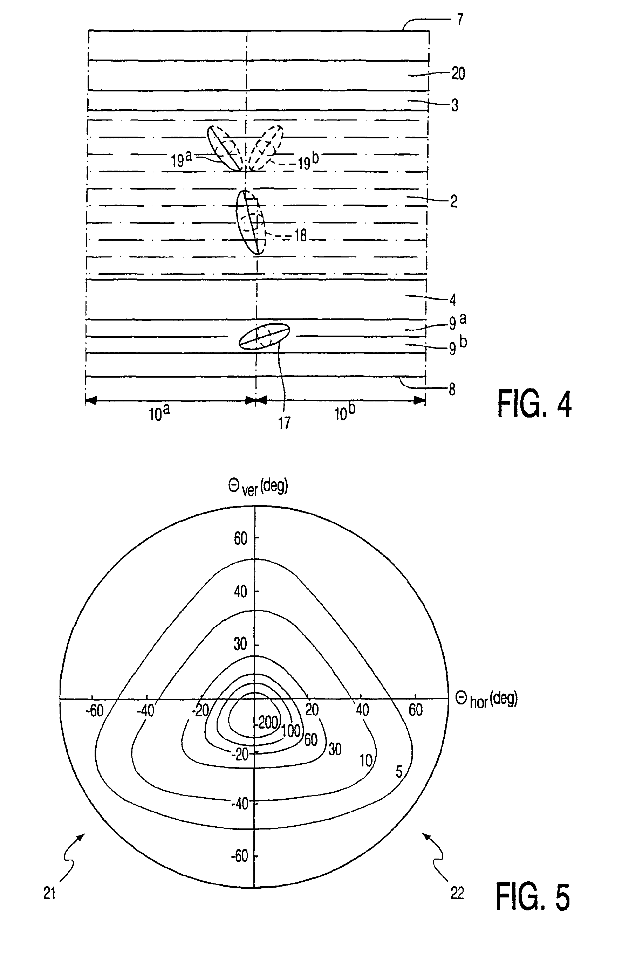

In accordance with the invention, the display cell (see Fig. 4) comprises a retardation foil 9 with an optical principal axis situated in the plane of polarization of the polarizer 8 and tilted relative to the normal to the substrate 4. Since the molecules near the substrate 4 are oriented in one direction, the behavior of the molecules in the lower half, to be represented by means of indicatrix 18, is practically identical for both sub-pixels (upon maximum drive). A good compensation for this part is obtained by a retardation foil (compensator layer) 9 with an indicatrix 17. The retardation foil 9 has an optical principal axis situated in the plane of polarization of polarizer 8 and tilted relative to the normal to the substrate 4.

A suitable retardation foil 9 comprises, for example, a positively birefringent foil 9^{a} with an optical axis in the plane of the substrate 4 and a positively birefringent foil 9^{b} with an optical axis tilted relative to the plane of the substrate 4. The plane subtended by these two axes extends substantially perpendicularly to the average direction of the directors in the lower half upon maximum drive (at the saturation voltage). The foils 9^{a,b} can be mutually exchanged.

The behavior of the molecules near the substrate 3, which are oriented in two mutually perpendicular directions in the upper half, can be represented in a similar way by means of indicatrices 19^{a}, 19^{b}. For an optimum compensation of this half, the pixel is provided with a retardation foil 20, preferably a positively birefringent foil whose optical axis extends at right angles to the orientation directions of the liquid crystal material, or a negatively birefringent foil whose optical axis extends at right angles to the substrate. Also a biaxially birefringent retardation foil can be used.

The Figs. 5 through 7 show iso-contrast curves for different display devices comprising pixels divided into sub-pixels 10^{a}, 10^{b} (dual-domain devices).

Fig. 5 shows an iso-contrast curve for a display device without retardation foils. The Figure clearly shows that the curve results from an iso-contrast curve, which is optimized for the viewing direction 21, and an iso-contrast curve which is optimized for the viewing direction 22.

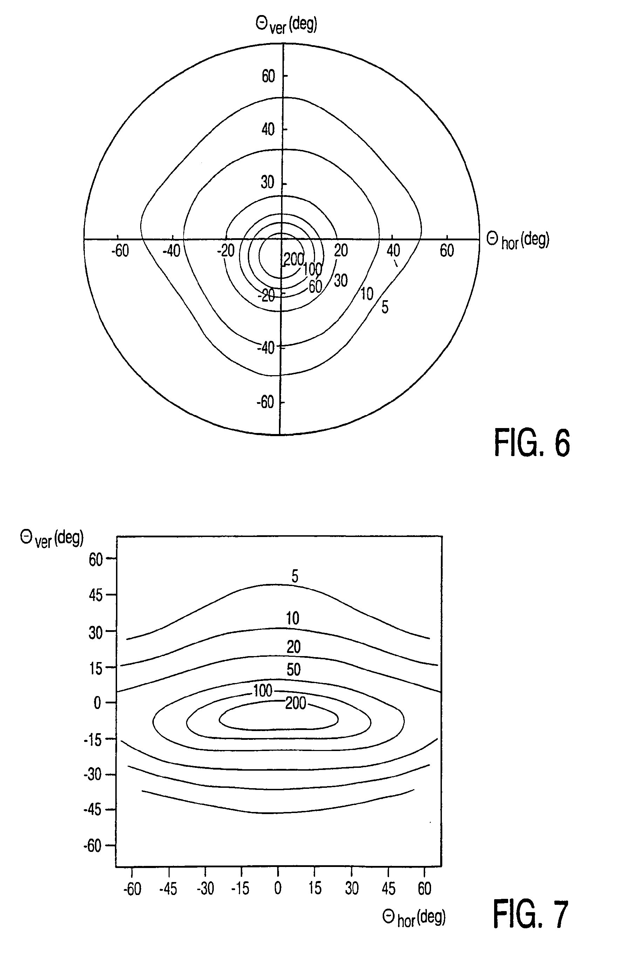

Fig. 6 shows an iso-contrast curve for a display device comprising mutually perpendicularly stretched retardation foils. This iso-contrast curve is much more symmetrical than the one shown in Fig. 5, but the angular range is practically the same.

Finally, Fig. 7 shows an iso-contrast curve for a display device in accordance with the invention comprising retardation foils 9^{a}, 9^{b} on the side where rubbing took place in one direction. In particular the horizontal viewing angle has increased considerably relative to that shown in Figs. 6, 7 (approximately by a factor of 4 for the region with a contrast value of 100). In this device, also the grey-scale inversion is reduced considerably relative to that shown in Figs. 6, 7. As mentioned hereinabove, a further improvement of the contrast and an increase of the viewing angle can be achieved by means of an additional retardation foil on the other side of the pixel.
In Fig. 7, the viewing angle in the horizontal direction has increased considerably. By rotating the sub-pixels through 90° while simultaneously adapting the axes of the retardation foils, of course an improvement of the viewing angle in the vertical direction is obtained.

## Claims

1. A liquid crystal display device with a display cell (1) provided with a number of pixels, comprising a layer (2) of a nematic liquid crystal material between a first substrate (4) provided with an orientation layer inducing only one, first, orientation direction in the molecules of the liquid crystal material and a second substrate (3), each of the pixels being divided in two sub-pixels (10^{a}, 10^{b}) of opposite twist sense, the display cell being situated between crossed first and second polarizers (8, 7) adjacent to said first and second substrates, respectively, **characterized in that** the first polarizer (8) has a plane of polarization which is practically paralle to the first direction of orientation, and the display device is provided with a retardation foil (9) having an optical principal axis which extends in the plane of polarization of the first polarizer (8) and is tilted relative to the normal to a plane through the first substrate (4).

2. A liquid crystal material as claimed in claim 1, wherein the second substrate is provided with an orientation layer which induces two orientation directions in molecules of the liquid crystal material.

3. A liquid crystal display device as claimed in claim 1, wherein the directions of polarization of the fisrt and second polarizers cross each other substantially perpendicularly.

4. A liquid crystal display device as claimed in claim 1, wherein the retardation foil comprises a first sub-foil (9a) having an optical principal axis in a plane parallel to the first substrate plane, and a second sub-foil (9b) having an optical principal axis which is tilted relative to the normal to the first substrate plane.

5. A liquid crystal display device as claimed in claim 1, wherein the optical principal axis of the retardation foil lies in a plane which extends substantially perpendicularly to the average direction of the directors of the liquid crystal material at a voltage across a pixel of the order of the saturation voltage.

6. A liquid crystal display device as claimed in claim 1, wherein the retardation foil is situated on the side of the first substrate.

7. A liquid crystal display device as claimed in claim 1, wherein the display cell is situated between the retardation foil and at least one further retardation foil.

## Patentansprüche

1. Flüssigkristallanzeigeeinrichtung mit einer mit einer Anzahl von Pixeln versehenen Anzeigezelle (1), die eine Schicht (2) eines nematischen Flüssigkristallmaterials zwischen einem ersten Substrat (4), das mit einer Orientierungsschicht versehen ist, die nur eine, erste, Orientierungsrichtung in die Moleküle des Flüssigkristallmaterials induziert, und einem zweiten Substrat (3) umfasst, wobei jedes der Pixel in zwei Sub-Pixel (10a, 10b) mit entgegengesetztem Drehsinn geteilt ist und die Anzeigezelle sich zwischen gekreuzten ersten und zweiten, zu dem genannten ersten beziehungsweise zweiten Substrat benachbarten, Polarisatoren (8, 7) befindet, **dadurch gekennzeichnet, dass** der erste Polarisator (8) eine Polarisationsebene hat, die praktisch parallel zu der ersten Orientierungsrichtung ist und die Anzeige mit einer Retarderfolie (9) mit einer optischen Hauptachse, die sich in der Polarisationsebene des ersten Polarisators (8) erstreckt und relativ zu der Senkrechten auf eine Ebene durch das erste Substrat (4) geneigt ist, versehen ist.

2. Flüssigkristallmaterial nach Anspruch 1, worin das zweite Substrat mit einer Orientierungsschicht versehen ist, die zwei Orientierungsrichtungen in die Moleküle des Flüssigkristallmaterials induziert.

3. Flüssigkristallanzeigeeinrichtung nach Anspruch 1, worin die Polarisationsrichtungen des ersten und zweiten Polarisators sich im Wesentlichen senkrecht kreuzen.

4. Flüssigkristallanzeigeeinrichtung nach Anspruch 1, worin die Retarderfolie eine erste Sub-Folie (9a) mit einer optischen Hauptachse in einer Ebene parallel zu der ersten Substratebene und eine zweite Sub-Folie (9b) mit einer optischen Hauptachse, die zu der Senkrechten auf die erste Substratebene geneigt ist, umfasst.

5. Flüssigkristallanzeigeeinrichtung nach Anspruch 1, worin die optische Hauptachse der Retarderfolie in einer Ebene liegt, die sich im Wesentlichen senkrecht zu der mittleren Richtung der Direktoren des Flüssigkristallmaterials bei einer Spannung über ein Pixel in der Größenordnung der Sättigungsspannung erstreckt.

6. Flüssigkristallanzeigeeinrichtung nach Anspruch 1, worin die Retarderfolie auf der Seite des ersten Substrats angeordnet ist.

7. Flüssigkristallanzeigeeinrichtung nach Anspruch 1, worin die Anzeigezelle zwischen der Retarderfolie und mindestens einer weiteren Retarderfolie angeordnet ist.

## Revendications

1. Dispositif d'affichage à cristaux liquides avec une cellule d'affichage (1) dotée d'un certain nombre de pixels, comprenant une couche (2) de cristaux liquides nématiques entre un premier substrat (4) pourvu d'une couche d'orientation qui n'induit qu'une seule première direction d'orientation dans les molécules des cristaux liquides et un second substrat (3), chacun des pixels étant divisé en deux sous-pixels (10^{a}, 10^{b}) de sens de torsion opposés, la cellule d'affichage étant située entre un premier et un second polariseurs croisés (8, 7) adjacents auxdits premier et second substrats, respectivement, **caractérisé en ce que** le premier polariseur (8) comporte un plan de polarisation qui est pratiquement parallèle à la première direction d'orientation, et le dispositif d'affichage est pourvu d'une feuille mince de retardement (9) comportant un axe principal optique qui s'étend dans le plan de polarisation du premier polariseur (8) et est incliné par rapport à la perpendiculaire à un plan passant à travers le premier substrat (4).

2. Cristaux liquides suivant la revendication 1, dans lequel le second substrat est doté d'une couche d'orientation qui induit deux directions d'orientation dans des molécules des cristaux liquides.

3. Dispositif d'affichage à cristaux liquides suivant la revendication 1, dans lequel les directions de polarisation du premier et du second polariseur se croisent l'une l'autre pratiquement perpendiculairement.

4. Dispositif d'affichage à cristaux liquides suivant la revendication 1, dans lequel la feuille mince de retardement comprend une première sous-feuille mince (9^{a}) ayant un axe principal optique dans un plan parallèle au premier plan de substrat, et une seconde sous-feuille mince (9^{b}) ayant un axe principal optique qui est incliné par rapport à la perpendiculaire au premier plan de substrat.

5. Dispositif d'affichage à cristaux liquides suivant la revendication 1, dans lequel l'axe principal optique de la feuille mince de retardement se trouve dans un plan qui s'étend en substance perpendiculairement à la direction moyenne des directeurs des cristaux liquides à une tension dans un pixel de l'ordre de la tension de saturation.

6. Dispositif d'affichage à cristaux liquides suivant la revendication 1, dans lequel la feuille mince de retardement est située du côté du premier substrat.

7. Dispositif d'affichage à cristaux liquides suivant la revendication 1, dans lequel la cellule d'affichage est située entre la feuille mince de retardement et au moins une autre feuille mince de retardement.
